# EUROPÄISCHE PATENTSCHRIFT

(11) **EP 3 901 870 B1**
(45) Veröffentlichungstag und Bekanntmachung des Hinweises auf die Patenterteilung: **08.05.2024**
(21) Anmeldenummer: 21164029.7
(22) Anmeldetag: 22.03.2021
(51) Int. Cl.: G06Q 10/06

(54) **PROJEKTBEZOGENE VERWALTUNG VON AKKUPACKS**
PROJECT-RELATED MANAGEMENT OF BATTERY PACKS
GESTION LIÉE AU PROJET DES BLOCS D'ACCUMULATEUR

(30) Priorität: 20.04.2020 DE 102020110716
(43) Veröffentlichungstag der Anmeldung: 27.10.2021
(73) Patentinhaber: Einhell Germany AG, 94405 Landau / Isar (DE)
(72) Erfinder: THANNHUBER, Markus, 94405 Landau (DE)
(74) Vertreter: Hofstetter, Schurack & Partner

(56) Entgegenhaltungen:
- US-A1- 2016 099 590

## Beschreibung

Die vorliegende Erfindung betrifft ein System und ein Verfahren zur projektbezogenen Verwaltung einer Vielzahl von Akkupacks für eines oder mehrere Elektrogeräte.

Ein entscheidender Aspekt für Benutzer akkubetriebener Elektrogeräte ist die Verfügbarkeit der Akkus und damit der Elektrogeräte. Je nach Ladungskapazität des Akkus kann es mehrere Stunden dauern, bis ein entleerter oder nahezu entleerter Akku so weit geladen ist, dass er für ein bevorstehendes Projekt genutzt werden kann. Das Problem besteht insbesondere bei komplexeren Projekten, bei denen mehrere Akkus und/oder mehrere Elektrogeräte zum Einsatz kommen.

Dokument US 2016/0099590 A1 beschreibt ein System, das als Kiosk bezeichnet wird, zum Verleihen, Transportieren, Laden und Entladen von Batteriepacks für Elektrowerkzeuge oder andere elektrische Geräte. Eine beispielhafte Systemarchitektur für die elektronische Steuerung des Kiosks weist eine CPU und ein Speicher-/Datenbankmodul aufweist. Auf das Speicher-/Datenbankmodul können beispielsweise der Ladezustand von in Fächern angeordneten Batteriepacks, ein Verleihauftrag oder ein Rückgabeauftrag, Transaktionsinformationen, Informationen über eine Authentifizierungs-, die Gleichstromimpedanz, Fehler und so weiter gespeichert werden. Der Kiosk umfasst einen oder mehrere Träger oder Schalen und einen oder mehrere wiederaufladbare, entnehmbare Batteriepacks, die von den Trägern aufgenommen werden können oder unabhängig von den Trägern direkt von dem Kiosk aufgenommen werden können. Die Träger können die Batteriepacks über einen oder mehrere Stromanschlüsse laden und entladen. Der Kiosk kann Software und/oder Hardware enthalten, die so programmiert sind, dass sie Verfahren zur aktiven Verwaltung des Aufladens der Trägern und Batteriepacks in den Fächern implementieren.

Vor diesem Hintergrund ist es eine Aufgabe der vorliegenden Erfindung, ein verbessertes Konzept zur automatisierten projektbezogenen Verwaltung einer Vielzahl von Akkupacks für Elektrogeräte anzugeben, durch das die Verfügbarkeit der Akkupacks für das Projekt zum erforderlichen Zeitpunkt sichergestellt oder verbessert werden kann.

Diese Aufgabe wird gelöst durch den jeweiligen Gegenstand der unabhängigen Ansprüche. Vorteilhafte Weiterbildungen und bevorzugte Ausführungsformen sind Gegenstand der abhängigen Ansprüche.

Das verbesserte Konzept beruht auf der Idee, die Vielzahl von Akkupacks in einer Lagervorrichtung, die auch zum Laden oder Entladen der Akkupacks geeignet ist, zu lagern und abhängig von einem Projektzeitplan eine Ladestrategie zu bestimmen, um die Akkupacks zielgerichtet zu laden beziehungsweise zu entladen.

Gemäß dem verbesserten Konzept wird ein System zur, insbesondere automatisierten, projektbezogenen Verwaltung einer Vielzahl, insbesondere zwei oder mehr, von Akkupacks für eines oder mehrere Elektrowerkzeuge angegeben. Das System weist eine Datenbank zur Speicherung eines Projektzeitplans für ein Projekt und zur Speicherung einer Auswahl von während des Projekts einzusetzenden Elektrowerkzeugen auf. Das System weist außerdem eine Lagervorrichtung zum Lagern der Vielzahl von Akkupacks auf, wobei die Lagervorrichtung wenigstens ein Ladegerät zum wahlweisen Laden und Entladen jedes Akkupacks der Vielzahl von Akkupacks enthält. Das System weist ein Steuerungssystem auf, das dazu eingerichtet ist, abhängig von dem Projektzeitplan und der Auswahl von einzusetzenden Elektrowerkzeugen eine Ladestrategie zu bestimmen und das wenigstens eine Ladegerät gemäß der Ladestrategie zum Laden und/oder Entladen der Vielzahl von Akkupacks anzusteuern.

Die Datenbank kann dabei insbesondere als Datenverwaltungssoftwaresystem mit einer Datenstruktur zur Speicherung der den Projektzeitplan und die Auswahl von Elektrowerkzeugen betreffenden Daten verstanden werden, wobei die Datenbank auf einer Speichereinheit des Systems gespeichert ist.

Unter dem Projekt kann eine Anzahl von Arbeitsschritten verstanden werden, die unter Verwendung der Elektrowerkzeuge, insbesondere der Auswahl einzusetzender Elektrowerkzeuge, durchgeführt werden können. Diese Arbeitsschritte können beispielsweise wenigstens zum Teil in einer vorgegebenen Reihenfolge abzuarbeiten sein. Das Projekt kann außerdem einen zeitlichen Rahmen oder eine konkrete Zeitvorgabe, insbesondere zur Fertigstellung sämtlicher Arbeitsschritte, beinhalten. Das Projekt kann außerdem durch ein Arbeitsergebnis und/oder eine Materialauswahl zum Erreichen des Arbeitsergebnisses definiert oder teilweise definiert sein.

Der Projektzeitplan kann beispielsweise einen oder mehrere Sollzeiträume oder Sollfertigstellungszeitpunkte für die Arbeitsschritte des Projekts beinhalten. Der Projektzeitplan kann auch Zuordnungen der Elektrogeräte und/oder der einzelnen Akkupacks zu den einzelnen Arbeitsschritten und damit indirekt zu den Sollzeiträumen oder Sollfertigstellungszeitpunkten beinhalten.

Der Projektzeitplan und/oder die Auswahl von während des Projekts einzusetzenden Elektrowerkzeugen können beispielsweise durch einen Benutzer über eine Benutzerschnittstelle des Systems direkt erfasst werden und in der Datenbank gespeichert werden.

Alternativ können mittels der Benutzerschnittstelle Benutzereingaben erfasst werden und eine Recheneinheit des Systems, beispielsweise eines Servercomputersystems des Systems oder des Steuerungssystems, kann den Projektzeitplan und/oder die Auswahl der einzusetzenden Elektrowerkzeuge basierend auf den Benutzereingaben bestimmen.

Beispielsweise können die Benutzereingaben einen zeitlichen Rahmen oder eine konkrete zeitliche Vorgabe zur Fertigstellung des Arbeitsergebnisses beinhalten. Die Benutzereingaben können auch die für den Benutzer verfügbaren Elektrogeräte definieren und/oder Arbeitsschritte des Projekts und/oder Materialien, die zur Durchführung des Projekts erforderlich sind.

Die Akkupacks der Vielzahl von Akkupacks können beispielsweise alle derselben Art sein und für alle der einzusetzenden Elektrowerkzeuge eingesetzt werden. Alternativ kann die Vielzahl von Akkupacks verschiedene Typen von Akkupacks, beispielsweise mit unterschiedlichen Ladekapazitäten und/oder Ausgangsspannungen und/oder Größen und dergleichen, aufweisen.

Die Datenbank speichert insbesondere Informationen diesbezüglich, welche Arten von Akkupacks und wie viele Akkupacks, gegebenenfalls des entsprechenden Typs, in der Vielzahl von Akkupacks verfügbar sind. Das Steuerungssystem bestimmt die Ladestrategie insbesondere abhängig von diesen Informationen.

Insbesondere kann das Steuerungssystem abhängig von dem Projektzeitplan und der Auswahl von einzusetzenden Elektrowerkzeugen als Teil der Ladestrategie bestimmen, wie viele Akkupacks und/oder Akkupacks welchen Typs beziehungsweise wie viele Akkupacks welchen Typs zu welchen Zeitpunkten benötigt werden. Mit anderen Worten beinhaltet die Ladestrategie Informationen dahingehend, wann welche Akkupacks der Vielzahl von Akkupacks zur Verfügung stehen müssen. Basierend auf diesen Informationen bestimmt das Steuerungssystem als Teil der Ladestrategie einen Zeitplan zum Laden und/oder Entladen der Vielzahl von Akkupacks, also einen Ladezeitplan.

Dabei ist das Steuerungssystem dazu eingerichtet, abhängig von dem Projektzeitplan und der Auswahl von einzusetzenden Elektrowerkzeugen den Ladezeitplan zum Laden und/oder Entladen der Vielzahl von Akkupacks zu bestimmen und das wenigstens eine Ladegerät gemäß dem Ladezeitplan zum Laden und/oder Entladen der Vielzahl von Akkupacks anzusteuern.

Wie oben erwähnt, ist der Ladezeitplan insbesondere Teil der Ladestrategie. Der Ladezeitplan beinhaltet dabei insbesondere Informationen, wann welche Anzahl von Akkus, gegebenenfalls welchen Typs, geladen sein beziehungsweise geladen werden muss, um den Projektzeitplan einzuhalten.

Dass die Vielzahl von Akkupacks zum Laden und/oder Entladen angesteuert wird, kann insbesondere derart verstanden werden, dass eine erste Teilmenge von Akkupacks der Vielzahl von Akkupacks zum Laden angesteuert wird und/oder eine zweite Teilmenge von Akkupacks der Vielzahl von Akkupacks zum Entladen angesteuert wird. Gegebenenfalls kann auch eine dritte Teilmenge von Akkupacks der Vielzahl von Akkupacks weder zum Laden noch zum Entladen angesteuert werden.

Die Lagervorrichtung kann gegebenenfalls eine bauliche Einheit bilden, sodass sämtliche Akkupacks der Vielzahl von Akkupacks in der Einheit gelagert werden. Alternativ kann die Lagervorrichtung aber auch mehrere räumlich verteilte Einheiten zum Lagern jeweils eines oder mehrerer Akkupacks der Vielzahl von Akkupacks beinhalten.

Ein Akkupack beinhaltet beispielsweise ein zusammengeschaltetes Paket mehrerer Akkumulatorzellen, die beispielsweise jeweils auf Lithium-Ionenbasis aufgebaut sind. Andere Akkutypen und elektrochemische Systeme sind aber ebenfalls möglich.

Ein System nach dem verbesserten Konzept kann also in automatisierter Weise dazu beitragen, dass für ein geplantes Projekt, bei dem eines oder mehrere Elektrowerkzeuge mit einer Vielzahl von Akkupacks eingesetzt werden sollen, die erforderlichen Akkupacks auch zu den jeweiligen Zeitpunkten verfügbar sind.

Akkupacks, die gemäß dem Projekt nicht zum Einsatz kommen, können durch das Entladen in einen Lagerzustand gebracht werden beziehungsweise in dem Lagerzustand gehalten werden, der insbesondere einer teilweisen Entladung des jeweiligen Akkupacks entspricht. Beispielsweise kann der Lagerzustand einem Ladezustand von zwischen 30 und 50 Prozent einer Maximalladung entsprechen, beispielsweise 40 Prozent oder näherungsweise 40 Prozent. Dadurch kann die Alterung nicht verwendeter Akkupacks reduziert werden.

Durch ein System nach dem verbesserten Konzept werden also Situationen vermieden, in denen der Benutzer, der das Projekt durchführen will, nicht die jeweils erforderlichen Akkupacks zum Betrieb der Elektrowerkzeuge ausreichend geladen zur Verfügung hat und es dadurch zu Verzögerungen im Projektzeitplan, insbesondere bezüglich des Fertigstellungszeitpunkts, kommt.

Gemäß zumindest einer Ausführungsform des Systems nach dem verbesserten Konzept weist die Lagervorrichtung für jedes Akkupack der Vielzahl von Akkupacks einen entsprechenden Lager- und Ladeplatz auf. Das wenigstens eine Ladegerät ist dazu eingerichtet, jedes Akkupack der Vielzahl von Akkupacks, insbesondere angesteuert durch das Steuerungssystem, wahlweise zu laden oder zu entladen, wenn das entsprechende Akkupack an dem jeweiligen Lager- und Ladeplatz angeordnet ist, insbesondere in einer bestimmungsgemäßen Weise angeordnet ist.

Der Lager- und Ladeplatz kann beispielsweise als Steckplatz ausgestaltet sein, also eine Steckvorrichtung, insbesondere eine elektrische Kontaktvorrichtung, zum Einstecken oder Kontaktieren des jeweiligen Akkupacks aufweisen. Der Lager- und Ladeplatz kann aber auch als induktiver Ladebereich ausgestaltet sein, sodass mittels des wenigstens einen Ladegeräts eine entsprechende induktive Ladung des jeweiligen Akkupacks möglich ist, ohne dass eine galvanische Kontaktierung notwendig ist.

Insbesondere ist eine Anzahl der Lager- und Ladeplätze der Lagervorrichtung größer oder gleich einer Anzahl der Vielzahl von Akkupacks.

Gemäß zumindest einer Ausführungsform weist das Steuerungssystem eine Recheneinheit auf, die dazu eingerichtet ist, abhängig von dem Projektzeitplan und der Auswahl von einzusetzenden Elektrowerkzeugen die Ladestrategie zu bestimmen. Das Steuerungssystem weist außerdem eine Steuereinheit auf, die dazu eingerichtet ist, abhängig von der Ladestrategie wenigstens ein Steuersignal zu erzeugen. Das wenigstens eine Ladegerät ist dazu eingerichtet, die Akkupacks Vielzahl von Akkupacks abhängig von dem wenigstens einen Steuersignal zu laden und/oder zu entladen.

Die Recheneinheit und die Steuereinheit können dabei in einem gemeinsamen Gehäuse angeordnet sein oder räumlich voneinander getrennt ausgebildet sein.

Beispielsweise kann die Steuereinheit drahtgebunden mit der Lagervorrichtung, insbesondere dem wenigstens einen Ladegerät, verbunden sein. Aber auch eine drahtlose Kopplung ist denkbar.

Die Recheneinheit kann beispielsweise drahtgebunden oder drahtlos mit der Steuereinheit gekoppelt sein. Insbesondere kann die Recheneinheit Teil eines Servercomputersystems sein.

Gemäß zumindest einer Ausführungsform ist das Steuerungssystem dazu eingerichtet, abhängig von dem Projektzeitplan und der Auswahl von einzusetzenden Elektrowerkzeugen, und insbesondere abhängig von dem Ladezeitplan, eine erste Teilmenge der Vielzahl von Akkupacks zu bestimmen und jedes Akkupack der ersten Teilmenge gemäß dem Ladezeitplan auf einen Ladezielzustand zu laden.

Der Ladezielzustand entspricht dabei beispielsweise einem Ladezustand des Akkupacks innerhalb eines optimalen Ladebereichs des jeweiligen Akkupacks oder einem Maximalladezustand des jeweiligen Akkupacks.

Das Bestimmen der ersten Teilmenge der Vielzahl von Akkupacks entspricht insbesondere einem Teil der Ladestrategie.

Gemäß zumindest einer Ausführungsform ist das Steuerungssystem dazu eingerichtet, abhängig von dem Projektzeitplan und der Auswahl von einzusetzenden Elektrowerkzeugen, und insbesondere abhängig von dem Ladezeitplan, eine zweite Teilmenge der Vielzahl von Akkupacks zu bestimmen und jedes Akkupack der zweiten Teilmenge gemäß dem Ladezeitplan auf einen Entladezielzustand zu entladen.

Der Entladezielzustand kann beispielsweise dem Lagerungszustand des Akkupacks entsprechen. Insbesondere kann der Entladezielzustand 30 bis 50 Prozent, beispielsweise 40 Prozent oder ungefähr 40 Prozent, der Maximalladung des Akkupacks entsprechen. Dadurch kann eine sichere und schonende Ladung bei reduzierter Alterung des Akkupacks ermöglicht werden.

Das Bestimmen der zweiten Teilmenge der Vielzahl von Akkupacks kann beispielsweise als Teil der Ladestrategie aufgefasst werden.

Je nach initialem Ladezustand der Akkupacks der Vielzahl von Akkupacks kann eine dritte Teilmenge der Akkupacks gegeben sein, die weder geladen noch entladen werden muss, da sich diese bereits in dem entsprechend erforderlichen oder passenden Zustand befinden.

Gemäß zumindest einer Ausführungsform weist das System eine mit der Datenbank gekoppelte Benutzerschnittstelle auf, die dazu eingerichtet ist, Benutzereingaben zu erfassen und abhängig von den Benutzereingaben den Projektzeitpunkt und die Auswahl von einzusetzenden Elektrowerkzeugen in der Datenbank zu speichern.

Die Benutzerschnittstelle kann dabei als Softwareschnittstelle verstanden werden. Beispielsweise kann die Benutzerschnittstelle Teil eines Servercomputersystems sein. Die Benutzereingaben können dann beispielsweise über ein Internetformular oder eine interaktive Webseite erfasst und gespeichert werden.

In verschiedenen Ausgestaltungen des Systems kann, wie oben ausgeführt, auch eine Verarbeitung der Benutzereingaben erfolgen, um den Projektzeitplan und/oder die Auswahl von einzusetzenden Elektrowerkzeugen zu bestimmen und diese daraufhin in der Datenbank zu speichern.

Die Benutzerschnittstelle kann auch eine Smartphoneapplikation oder ein sonstiges Computerprogramm oder eine Webseite beinhalten.

Beispielsweise können die Applikation, das Programm oder die Webseite den Benutzer zur Eingabe erforderlicher Informationen auffordern und den Benutzer gegebenenfalls entsprechend anleiten. Dadurch kann sichergestellt werden, dass die erforderlichen Informationen, um den Projektzeitplan beziehungsweise die Auswahl von einzusetzenden Elektrowerkzeugen zuverlässig zu bestimmen, zur Verfügung steht.

Gemäß zumindest einer Ausführungsform ist das Steuerungssystem dazu eingerichtet, einen initialen Ladezustand der Vielzahl von Akkupacks, insbesondere jedes Akkupacks der Vielzahl von Akkupacks, zu bestimmen. Das Steuerungssystem ist dazu eingerichtet, die Ladestrategie abhängig von dem initialen Ladezustand der Vielzahl von Akkupacks zu bestimmen.

Der Ladezustand kann beispielsweise mittels der Steuereinheit und/oder der Lagerungsvorrichtung, insbesondere des wenigstens einen Ladegeräts, bestimmt und gegebenenfalls an das Steuerungssystem, beispielsweise die Recheneinheit des Steuerungssystems, übertragen oder übermittelt werden.

Basierend auf dem initialen Ladezustand kann insbesondere eine genaue Abschätzung erfolgen, welche und wie viele Akkupacks tatsächlich geladen werden müssen.

Gemäß zumindest einer Ausführungsform weist das System das Servercomputersystem auf, wobei das Servercomputersystem eine Speichereinheit enthält, auf der die Datenbank gespeichert ist.

Das Servercomputersystem kann auch die Benutzerschnittstelle beinhalten oder zum Teil beinhalten. Das Servercomputersystem kann insbesondere auch die Recheneinheit des Steuerungssystems teilweise oder vollständig beinhalten. Das Servercomputersystem kann auch Teil des Steuerungssystems sein.

Gemäß zumindest einer Ausführungsform enthält das System die Vielzahl von Akkupacks.

Gemäß dem verbesserten Konzept wird auch ein Verfahren zur automatisierten projektbezogenen Verwaltung einer Vielzahl von Akkupacks für eines oder mehrere Elektrowerkzeuge angegeben. Dabei werden ein Projektzeitplan für ein Projekt und eine Auswahl von während des Projekts einzusetzenden Elektrowerkzeugen in einer Datenbank gespeichert. Die Vielzahl von Akkupacks wird in einer Lagervorrichtung gelagert. Abhängig von dem Projektzeitplan und von der Auswahl von einzusetzenden Elektrowerkzeugen wird, insbesondere mittels eines Steuerungssystems, eine Ladestrategie bestimmt. Die Vielzahl von Akkupacks wird gemäß der Ladestrategie in der Lagervorrichtung, insbesondere mittels eines oder mehrerer Ladegeräte, beispielsweise der Lagervorrichtung, geladen und/oder entladen.

Es wird, insbesondere mittels des Steuerungssystems, abhängig von dem Projektzeitplan und von der Auswahl von einzusetzenden Elektrowerkzeugen ein Ladezeitplan zum Laden und/oder Entladen der Vielzahl von Akkupacks bestimmt. Die Vielzahl von Akkupacks wird, insbesondere mittels des einen oder der mehreren Ladegeräte, gemäß dem Ladezeitplan geladen oder entladen.

Gemäß zumindest einer Ausgestaltungsform des Verfahrens wird, insbesondere mittels des Steuerungssystems, abhängig von dem Projektzeitplan und von der Auswahl von einzusetzenden Elektrowerkzeugen eine erste Teilmenge der Vielzahl von Akkupacks bestimmt und jedes Akkupack der ersten Teilmenge wird, insbesondere mittels des einen oder der mehreren Ladegeräte, gemäß dem Ladezeitplan auf einen Ladezielzustand geladen.

Gemäß zumindest einer Ausführungsform wird, insbesondere mittels des Steuerungssystems, abhängig von dem Projektzeitplan und der Auswahl von einzusetzenden Elektrowerkzeugen eine zweite Teilmenge der Vielzahl von Akkupacks bestimmt. Jedes Akkupack der zweiten Teilmenge wird, insbesondere mittels des einen oder der mehreren Ladegeräte, gemäß dem Ladezeitplan auf einen Entladezielzustand entladen.

Gemäß zumindest einer Ausführungsform werden Benutzereingaben mittels einer Benutzerschnittstelle erfasst und der Projektzeitplan und die Auswahl von einzusetzenden Elektrowerkzeugen werden abhängig von den Benutzereingaben in der Datenbank gespeichert.

Weitere Ausführungsformen des Verfahrens nach dem verbesserten Konzept folgen direkt aus den verschiedenen Ausgestaltungsformen des Systems nach dem verbesserten Konzept und umgekehrt. Insbesondere ist ein System nach dem verbesserten Konzept dazu eingerichtet oder programmiert, ein Verfahren nach dem verbesserten Konzept durchzuführen oder es führt ein solches Verfahren durch.

Gemäß dem verbesserten Konzept wird auch ein Computerprogrammprodukt angegeben. Das Computerprogrammprodukt enthält eines oder mehrere Computerprogramme mit jeweiligen Befehlen. Werden die Befehle oder die Computerprogramme durch ein System nach dem verbesserten Konzept ausgeführt, insbesondere durch die Recheneinheit des Systems, so veranlassen die Befehle der Computerprogramme das System dazu, ein Verfahren nach dem verbesserten Konzept durchzuführen.

Gemäß dem verbesserten Konzept wird auch ein computerlesbares Speichermedium angegeben, auf dem ein Computerprogramm nach dem verbesserten Konzept gespeichert ist.

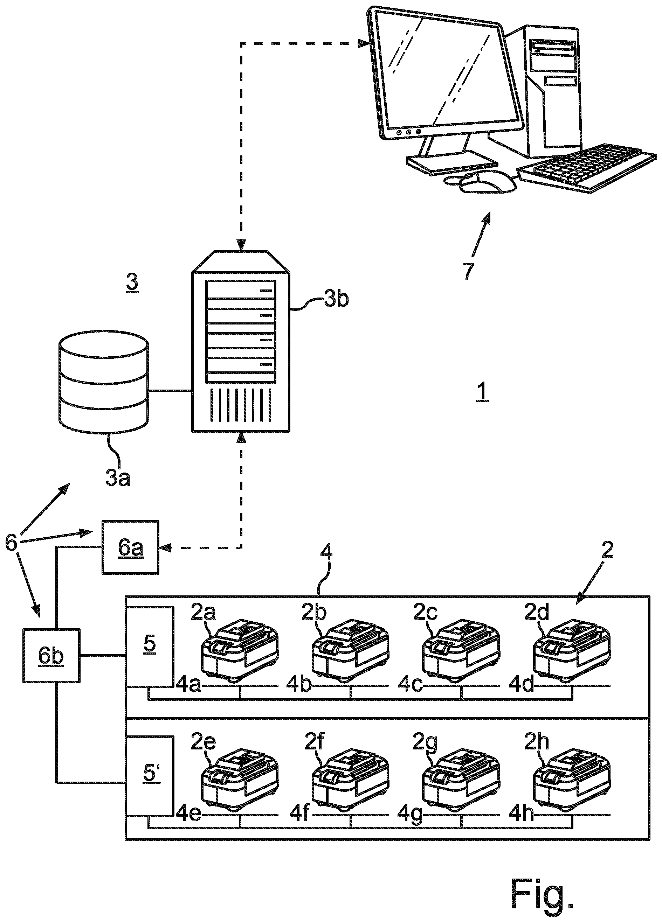

Die Figur Fig. zeigt eine schematische Blockdarstellung einer beispielhaften Ausführungsform eines Systems nach dem verbesserten Konzept.

In der Fig. ist eine schematische Blockdarstellung einer beispielhaften Ausführungsform eines Systems 1 zur projektbezogenen Verwaltung von Akkupacks 2 dargestellt. Das System 1 weist beispielsweise ein Servercomputersystem 3 mit einer Speichereinheit 3a auf, auf der eine Datenbank gespeichert ist. Das Servercomputersystem 3 weist außerdem eine Serverrecheneinheit 3b auf, die mit der Speichereinheit 3a gekoppelt ist.

Das System 1 weist außerdem ein Steuerungssystem 6 auf. Das Steuerungssystem 6 kann das Servercomputersystem 3 teilweise oder vollständig beinhalten, insbesondere die Serverrecheneinheit 3b und/oder die Speichereinheit 3a.

Das Steuerungssystem 6 kann optional eine weitere Recheneinheit 6a aufweisen, die beispielsweise mit der Serverrecheneinheit 3b und/oder der Speichereinheit 3a drahtlos oder drahtgebunden kommunizieren kann. In verschiedenen Ausgestaltungsformen können jedoch Aufgaben der Serverrecheneinheit 3b teilweise oder vollständig von der Recheneinheit 6a übernommen werden oder umgekehrt.

Das Steuerungssystem weist außerdem eine Steuereinheit 6b auf, die mit der Recheneinheit 6a verbunden ist. Das System 1 weist eine Lagervorrichtung 4 auf, in der die Akkupacks 2 gelagert und/oder geladen beziehungsweise entladen werden können.

Beispielhaft sind in der Fig. acht Akkupacks 2a, 2b, 2c, 2d, 2e, 2f, 2g, 2h dargestellt. Die Lagervorrichtung 4 enthält für jedes Akkupack 2a bis 2h einen entsprechende Lager- und Ladeplatz 4a, 4b, 4c, 4d, 4e, 4f, 4g, 4h.

Die Akkupacks 2a bis 2h können dabei auf einen entsprechenden Bereich des jeweiligen Lager- und Ladeplatzes 4a bis 4h gelegt werden und beispielsweise induktiv geladen werden. Alternativ können auch Steckkontakte an den Lager- und Ladeplätzen 4a bis 4h vorgesehen sein, in welche die Akkupacks 2a bis 2h zum Laden und/oder Entladen gesteckt werden können.

Die Lagervorrichtung 4, insbesondere die Lade- und Lagerplätze 4a bis 4h, können entgegen der Darstellung in der Fig. auch räumlich getrennt oder räumlich verteilt angeordnet sein.

Die Lagervorrichtung 4 enthält eines oder mehrere Ladegeräte 5, 5', die mit den Lager- und Ladeplätzen 4a bis 4h verbunden sind, um entsprechend angeordnete oder angeschlossene Akkupacks 2a bis 2h wahlweise entladen und/oder laden zu können.

Auf der Datenbank sind ein Projektzeitplan für ein Projekt sowie eine Auswahl von während des Projekts einzusetzenden Elektrowerkzeugen gespeichert, wobei die Elektrowerkzeuge (nicht gezeigt) mit einem oder mehreren der Akkupacks 2 betrieben werden können.

Ein Benutzer 7 kann insbesondere über eine Softwareschnittstelle des Servercomputersystems 3, beispielsweise über eine Webapplikation oder eine interaktive Webseite, Benutzereingaben tätigen, die von der Serverrecheneinheit 3b erfasst werden. Die Serverrecheneinheit 3b kann basierend auf den Benutzereingaben den Projektzeitplan und die Auswahl von während dem Projekt einzusetzenden Elektrowerkzeugen bestimmen und in der Datenbank speichern.

Die Serverrecheneinheit 3b und/oder die Recheneinheit 6a kann dann basierend auf dem Projektzeitplan und der Auswahl einzusetzender Elektrowerkzeuge eine Ladestrategie für die Akkupacks 2 bestimmen. Dazu kann die Serverrecheneinheit 3b und/oder die Recheneinheit 6a insbesondere einen Ladezeitplan für die Akkupacks 2 bestimmen, gemäß dem vorgegeben ist, zu welchen Zeitpunkten welche der Akkupacks 2a bis 2h zu welchen Zeitpunkten geladen sein müssen. Die zu ladenden Akkupacks 2a bis 2h entsprechen insbesondere einer ersten Teilmenge der Akkupacks 2. Eine zweite Teilmenge der Akkupacks 2, die nicht zur Durchführung des Projekts erforderlich ist, kann gemäß dem Ladezeitplan auf einen Entladezielzustand zu entladen sein.

Entsprechend dem Ladezeitplan kann die Steuereinheit 6b eines oder mehrere Steuersignale zum Ansteuern der Ladegeräte 5, 5' erzeugen. Die Ladegeräte 5, 5' laden dann die entsprechenden Akkupacks 2 gemäß dem Ladezeitplan beziehungsweise entladen diese gemäß dem Ladezeitplan.

Wie bezüglich der Fig. beschrieben, wird durch das verbesserte Konzept die Verfügbarkeit der Akkupacks für ein geplantes Projekt zielgerichtet und automatisch sichergestellt.

### BEZUGSZEICHENLISTE:

- 1: System
- 2: Akkupacks
- 2a bis 2h: Akkupacks
- 3: Servercomputersystem
- 3a: Speichereinheit
- 3b: Serverrecheneinheit
- 4: Lagervorrichtung
- 4a bis 4h: Lager- und Ladeplätze
- 5, 5`: Ladegeräte
- 6: Steuerungssystem
- 6a: Recheneinheit
- 6b: Steuereinheit
- 7: Benutzer

## Patentansprüche

1. System zur projektbezogenen Verwaltung einer Vielzahl von Akkupacks (2) für eines oder mehrere Elektrowerkzeuge, wobei
- das System (1) eine Datenbank aufweist, die einen Projektzeitplan für ein Projekt und eine Auswahl von während des Projekts einzusetzenden Elektrowerkzeugen speichert,
- das Projekt eine Anzahl von Arbeitsschritten enthält, die unter Verwendung der Auswahl einzusetzender Elektrowerkzeuge durchgeführt werden können;
- der Projektzeitplan einen oder mehrere Sollzeiträume oder Sollfertigstellungszeitpunkte für die Arbeitsschritte des Projekts beinhaltet;
- das System (1) eine Lagervorrichtung (4) zum Lagern der Vielzahl von Akkupacks (2) aufweist, wobei die Lagervorrichtung (4) wenigstens ein Ladegerät (5, 5') zum wahlweisen Laden und Entladen der Vielzahl von Akkupacks (2) enthält;
- das System (1) ein Steuerungssystem (6) aufweist, das dazu eingerichtet ist, abhängig von dem Projektzeitplan und der Auswahl von einzusetzenden Elektrowerkzeugen eine Ladestrategie zu bestimmen und das wenigstens eine Ladegerät (5, 5') gemäß der Ladestrategie zum Laden und/oder Entladen der Vielzahl von Akkupacks (2) anzusteuern;
- das Steuerungssystem (6) dazu eingerichtet ist, abhängig von dem Projektzeitplan und der Auswahl von einzusetzenden Elektrowerkzeugen als Teil der Ladestrategie einen Ladezeitplan zum Laden und/oder Entladen der Vielzahl von Akkupacks (2) zu bestimmen und das wenigstens eine Ladegerät (5, 5') gemäß dem Ladezeitplan zum Laden und/oder Entladen der Vielzahl von Akkupacks (2) anzusteuern.

2. System nach Anspruch 1, wobei
- die Lagervorrichtung (4) für jedes Akkupack (2a-2h) der Vielzahl von Akkupacks (2) einen Lager- und Ladeplatz (4a-4h) aufweist; und
- das wenigstens eine Ladegerät (5, 5') dazu eingerichtet ist jedes Akkupack (2a-2h) wahlweise zu laden oder zu entladen, wenn das Akkupack (2a-2h) an dem jeweiligen Lager- und Ladeplatz (4a-4h) angeordnet ist.

3. System nach einem der vorhergehenden Ansprüchen, wobei
- das Steuerungssystem (6)
- eine Recheneinheit (6a, 3b) aufweist, die dazu eingerichtet ist, abhängig von dem Projektzeitplan und der Auswahl von einzusetzenden Elektrowerkzeugen die Ladestrategie zu bestimmen; und
- eine Steuereinheit (6b) aufweist, die dazu eingerichtet ist, abhängig von der Ladestrategie wenigstens ein Steuersignal zu erzeugen; und
- das wenigstens eine Ladegerät (5, 5') dazu eingerichtet ist, die Vielzahl von Akkupacks (2) abhängig von dem wenigstens einen Steuersignal zu laden und/oder zu entladen.

4. System nach einem der vorhergehenden Ansprüche, wobei das Steuerungssystem (6) dazu eingerichtet ist,
- abhängig von dem Projektzeitplan und der Auswahl von einzusetzenden Elektrowerkzeugen eine erste Teilmenge der Vielzahl von Akkupacks (2) zu bestimmen; und
- jedes Akkupack der ersten Teilmenge gemäß dem Ladezeitplan auf einen Ladezielzustand zu laden.

5. System nach einem der vorhergehenden Ansprüche, wobei das Steuerungssystem (6) dazu eingerichtet ist,
- abhängig von dem Projektzeitplan und der Auswahl von einzusetzenden Elektrowerkzeugen eine zweite Teilmenge der Vielzahl von Akkupacks (2) zu bestimmen; und
- jedes Akkupack der zweiten Teilmenge gemäß dem Ladezeitplan auf einen Entladezielzustand zu entladen.

6. System nach einem der vorhergehenden Ansprüche, aufweisend eine mit der Datenbank gekoppelte Benutzerschnittstelle, die dazu eingerichtet ist, Benutzereingaben zu erfassen und abhängig von den Benutzereingaben den Projektzeitplan und die Auswahl von einzusetzenden Elektrowerkzeugen in der Datenbank zu speichern.

7. System nach einem der vorhergehenden Ansprüche, wobei das Steuerungssystem (4) dazu eingerichtet ist,
- einen initialen Ladezustand der Vielzahl von Akkupacks (2) zu bestimmen; und
- die Ladestrategie abhängig von dem initialen Ladezustand zu bestimmen.

8. System nach einem der vorhergehenden Ansprüche, aufweisend ein Servercomputersystem (3), welches eine Speichereinheit (3a) mit der Datenbank enthält.

9. Verfahren zur automatisierten projektbezogenen Verwaltung einer Vielzahl von Akkupacks (2) für eines oder mehrere Elektrowerkzeuge, wobei
- ein Projektzeitplan für ein Projekt und eine Auswahl von während des Projekts einzusetzenden Elektrowerkzeugen in einer Datenbank gespeichert werden;
- das Projekt eine Anzahl von Arbeitsschritten enthält, die unter Verwendung der Auswahl einzusetzender Elektrowerkzeuge durchgeführt werden können;
- der Projektzeitplan einen oder mehrere Sollzeiträume oder Sollfertigstellungszeitpunkte für die Arbeitsschritte des Projekts beinhaltet;
- die Vielzahl von Akkupacks (2) in einer Lagervorrichtung (4) gelagert wird;
- abhängig von dem Projektzeitplan und von der Auswahl von einzusetzenden Elektrowerkzeugen eine Ladestrategie bestimmt wird;
- die Vielzahl von Akkupacks (2) gemäß der Ladestrategie in der Lagervorrichtung (4) geladen und/oder entladen wird;
- abhängig von dem Projektzeitplan und der Auswahl von einzusetzenden Elektrowerkzeugen als Teil der Ladestrategie ein Ladezeitplan zum Laden und/oder Entladen der Vielzahl von Akkupacks (2) bestimmt wird; und
- die Vielzahl von Akkupacks (2) gemäß dem Ladezeitplan geladen und/oder entladen wird.

10. Verfahren nach Anspruch 9, wobei
- abhängig von dem Projektzeitplan und der Auswahl von einzusetzenden Elektrowerkzeugen eine erste Teilmenge der Vielzahl von Akkupacks (2) bestimmt wird und jedes Akkupack der ersten Teilmenge gemäß dem Ladezeitplan auf einen Ladezielzustand geladen wird; und/oder
- abhängig von dem Projektzeitplan und der Auswahl von einzusetzenden Elektrowerkzeugen eine zweite Teilmenge der Vielzahl von Akkupacks (2) bestimmt wird und jedes Akkupack der zweiten Teilmenge gemäß dem Ladezeitplan auf einen Entladezielzustand entladen wird.

11. Verfahren nach einem der Ansprüche 9 oder 10, wobei Benutzereingaben mittels einer Benutzerschnittstelle erfasst werden und der Projektzeitplan und die Auswahl von einzusetzenden Elektrowerkzeugen abhängig von den Benutzereingaben in der Datenbank gespeichert werden.

## Claims

1. A system for the project-related management of a plurality of battery packs (2) for one or more electric tools, wherein
- the system (1) comprises a database, which stores a project schedule for a project and a selection of electric tools to be employed during the project,
- the project includes a number of working steps, which can be performed using the selection of electric tools to be employed;
- the project schedule includes one or more nominal periods of time or nominal completion points of time for the working steps of the project;
- the system (1) comprises a storage device (4) for storing the plurality of battery packs (2), wherein the storage device (4) includes at least one charging device (5, 5') for selectively charging and discharging the plurality of battery packs (2);
- the system (1) comprises a control system (6), which is configured to determine a charging strategy depending on the project schedule and on the selection of electric tools to be employed and to control the at least one charging device (5, 5') according to the charging strategy for charging and/or discharging the plurality of battery packs (2);
- the control system (6) is configured to determine a charging schedule for charging and/or discharging the plurality of battery packs (2) depending on the project schedule and on the selection of electric tools to be employed as a part of the charging strategy and to control the at least one charging device (5, 5') according to the charging schedule for charging and/or discharging the plurality of battery packs (2).

2. The system according to claim 1, wherein
- the storage device (4) comprises a storage and charging location (4a-4h) for each battery pack (2a-2h) of the plurality of battery packs (2); and
- the at least one charging device (5, 5') is configured to selectively charge or discharge each battery pack (2a-2h) when the battery pack (2a-2h) is arranged at the respective storage and charging location (4a-4h).

3. The system according to any one of the preceding claims, wherein
- the control system (6)
- comprises a computing unit (6a, 3b), which is configured to determine the charging strategy depending on the project schedule and on the selection of electric tools to be employed; and
- comprises a control unit (6b), which is configured to generate at least one control signal depending on the charging strategy; and
- the at least one charging device (5, 5') is configured to charge and/or to discharge the plurality of battery packs (2) depending on the at least one control signal.

4. The system according to any one of the preceding claims, wherein the control system (6) is configured,
- to determine a first subset of the plurality of battery packs (2) depending on the project schedule and on the selection of electric tools to be employed; and
- to charge each battery pack of the first subset to a target state of charge according to the charging schedule.

5. The system according to any one of the preceding claims, wherein the control system (6) is configured
- to determine a second subset of the plurality of battery packs (2) depending on the project schedule and on the selection of electric tools to be employed; and
- to discharge each battery pack of the second subset to a target state of discharge according to the charging schedule.

6. The system according to any one of the preceding claims, comprising a user interface coupled to the database, which is configured to capture user inputs and to store the project schedule and the selection of electric tools to be employed in the database depending on the user inputs.

7. The system according to any one of the preceding claims, wherein the control system (4) is configured
- to determine an initial state of charge of the plurality of battery packs (2); and
- to determine the charging strategy depending on the initial state of charge.

8. The system according to any one of the preceding claims, comprising a server computer system (3), which includes a storage unit (3a) with the database.

9. A method for automated project-related management of a plurality of battery packs (2) for one or more electric tools, wherein
- a project schedule for a project and a selection of electric tools to be employed during the project are stored in a database;
- the project includes a number of working steps, which can be performed using the selection of electric tools to be employed;
- the project schedule includes one or more nominal periods of time or nominal completion points of time for the working steps of the project;
- the plurality of battery packs (2) is stored in a storage device (4);
- a charging strategy is determined depending on the project schedule and on the selection of electric tools to be employed;
- the plurality of battery packs (2) is charged and/or discharged in the storage device (4) according to the charging strategy;
- a charging schedule for charging and/or discharging the plurality of battery packs (2) is determined as part of the charging strategy depending on the project schedule and on the selection of electric tools to be employed; and
- the plurality of battery packs (2) is charged and/or discharged according to the charging schedule.

10. The method according to claim 9, wherein
- a first subset of the plurality of battery packs (2) is determined depending on the project schedule and on the selection of electric tools to be employed, and each battery pack of the first subset is charged to a target state of charge according to the charging schedule; and/or
- a second subset of the plurality of battery packs (2) is determined depending on the project schedule and on the selection of electric tools to be employed, and each battery pack of the second subset is discharged to a target state of discharge according to the charging schedule.

11. The method according to any one of claims 9 or 10, wherein user inputs are captured by means of a user interface and the project schedule and the selection of electric tools to be employed are stored in the database depending on the user inputs.

## Revendications

1. Système permettant de gérer de manière liée à des projets une pluralité de blocs d'accumulateur (2) pour un ou plusieurs outils électriques, dans lequel
- le système (1) présente une base de données qui mémorise un planning de projet pour un projet et une sélection d'outils électriques à mettre en œuvre au cours du projet,
- le projet comporte un certain nombre d'étapes de travail qui peuvent être effectuées en utilisant la sélection d'outils électriques à mettre en oeuvre ;
- le planning de projet comporte une ou plusieurs périodes de consigne ou un ou plusieurs moments d'achèvement de consigne pour les étapes de travail du projet ;
- le système (1) présente un dispositif de stockage (4) pour stocker la pluralité de blocs d'accumulateur (2), dans lequel le dispositif de stockage (4) comporte au moins un chargeur (5, 5') pour charger et décharger sélectivement la pluralité de blocs d'accumulateur (2) ;
- le système (1) présente un système de commande (6) qui est conçu pour déterminer une stratégie de chargement en fonction du planning de projet et de la sélection d'outils électriques à mettre en oeuvre, et pour piloter ledit au moins un chargeur (5, 5') selon la stratégie de chargement pour charger et/ou décharger la pluralité de blocs d'accumulateur (2) ;
- le système de commande (6) est conçu, dans le cadre de la stratégie de chargement, pour déterminer un planning de chargement pour charger et/ou décharger la pluralité de blocs d'accumulateur (2) en fonction du planning de projet et de la sélection d'outils électriques à mettre en oeuvre, et pour piloter ledit au moins un chargeur (5, 5') selon le planning de chargement pour charger et/ou décharger la pluralité de blocs d'accumulateur (2).

2. Système selon la revendication 1, dans lequel
- le dispositif de stockage (4) présente un emplacement de stockage et de chargement (4a à 4h) pour chaque bloc d'accumulateur (2a à 2h) de la pluralité de blocs d'accumulateur (2) ; et
- ledit au moins un chargeur (5, 5') est conçu pour charger ou décharger sélectivement chaque bloc d'accumulateur (2a à 2h) lorsque le bloc d'accumulateur (2a à 2h) est disposé sur l'emplacement de stockage et de chargement (4a à 4h) respectif.

3. Système selon l'une quelconque des revendications précédentes, dans lequel
- le système de commande (6) présente
- une unité de calcul (6a, 3b) qui est conçue pour déterminer la stratégie de chargement en fonction du planning de projet et de la sélection d'outils électriques à mettre en oeuvre ; et
- une unité de commande (6b) qui est conçue pour générer au moins un signal de commande en fonction de la stratégie de chargement ; et
- ledit au moins un chargeur (5, 5') est conçu pour charger et/ou décharger la pluralité de blocs d'accumulateur (2) en fonction dudit au moins un signal de commande.

4. Système selon l'une quelconque des revendications précédentes, dans lequel le système de commande (6) est conçu pour
- déterminer un premier sous-ensemble de la pluralité de blocs d'accumulateur (2) en fonction du planning de projet et de la sélection d'outils électriques à mettre en oeuvre ; et
- charger chaque bloc d'accumulateur du premier sous-ensemble selon le planning de chargement jusqu'à un état de charge cible.

5. Système selon l'une quelconque des revendications précédentes, dans lequel le système de commande (6) est conçu pour
- déterminer un deuxième sous-ensemble de la pluralité de blocs d'accumulateur (2) en fonction du planning de projet et de la sélection d'outils électriques à mettre en oeuvre ; et
- décharger chaque bloc d'accumulateur du deuxième sous-ensemble selon le planning de chargement jusqu'à un état de décharge cible.

6. Système selon l'une quelconque des revendications précédentes, présentant une interface utilisateur couplée à la base de données, qui est conçue pour détecter des entrées utilisateur et pour mémoriser dans la base de données le planning de projet et la sélection d'outils électriques à mettre en œuvre en fonction des entrées utilisateur.

7. Système selon l'une quelconque des revendications précédentes, dans lequel le système de commande (4) est conçu pour
- déterminer un état de charge initial de la pluralité de blocs d'accumulateur (2) ; et
- déterminer la stratégie de charge en fonction de l'état de charge initial.

8. Système selon l'une quelconque des revendications précédentes, présentant un système d'ordinateur serveur (3) qui comporte une unité de mémoire (3a) comprenant la base de données.

9. Procédé permettant de gérer de manière liée à des projets une pluralité de blocs d'accumulateur (2) pour un ou plusieurs outils électriques, dans lequel
- un planning de projet pour un projet et une sélection d'outils électriques à mettre en œuvre au cours du projet sont mémorisés dans une base de données ;
- le projet comporte un certain nombre d'étapes de travail qui peuvent être effectuées en utilisant la sélection d'outils électriques à mettre en oeuvre ;
- le planning de projet comporte une ou plusieurs périodes de consigne ou un ou plusieurs moments d'achèvement de consigne pour les étapes de travail du projet ;
- la pluralité de blocs d'accumulateur (2) est stockée dans un dispositif de stockage (4) ;
- une stratégie de chargement est déterminée en fonction du planning de projet et de la sélection d'outils électriques à mettre en oeuvre ;
- la pluralité de blocs d'accumulateur (2) est chargée et/ou déchargée selon la stratégie de chargement dans le dispositif de stockage (4) ;
- dans le cadre de la stratégie de chargement, un planning de chargement pour charger et/ou décharger la pluralité de blocs d'accumulateur (2) est déterminé en fonction du planning de projet et de la sélection d'outils électriques à mettre en oeuvre ; et
- la pluralité de blocs d'accumulateur (2) est chargée et/ou déchargée selon le planning de chargement.

10. Procédé selon la revendication 9, dans lequel
- un premier sous-ensemble de la pluralité de blocs d'accumulateur (2) est déterminé en fonction du planning de projet et de la sélection d'outils électriques à mettre en oeuvre, et chaque bloc d'accumulateur du premier sous-ensemble est chargé selon le planning de chargement jusqu'à un état de charge cible ; et/ou
- un deuxième sous-ensemble de la pluralité de blocs d'accumulateur (2) est déterminé en fonction du planning de projet et de la sélection d'outils électriques à mettre en oeuvre, et chaque bloc d'accumulateur du deuxième sous-ensemble est déchargé selon le planning de chargement jusqu'à un état de décharge cible.

11. Procédé selon l'une quelconque des revendications 9 ou 10, dans lequel des entrées utilisateur sont détectées au moyen d'une interface utilisateur, et le planning de projet et la sélection d'outils électriques à mettre en œuvre sont mémorisés dans la base de données en fonction des entrées utilisateur.
